**Europäisches Patentamt**

**European Patent Office**

**Office européen des brevets**

(11) Veröffentlichungsnummer: **0 464 363 B1**

(12) **EUROPÄISCHE PATENTSCHRIFT**

(45) Veröffentlichungstag der Patentschrift: **17.11.94**

(21) Anmeldenummer: **91108552.0**

(22) Anmeldetag: **25.05.91**

(51) Int. Cl.5: **E21D 9/06**, E21D 9/14, G01C 7/06

---

(54) **Verfahren und Einrichtung zum Steuern eines Vortriebsschildes.**

---

(30) Priorität: **02.06.90 DE 4017833**

(43) Veröffentlichungstag der Anmeldung:
**08.01.92 Patentblatt 92/02**

(45) Bekanntmachung des Hinweises auf die
Patenterteilung:
**17.11.94 Patentblatt 94/46**

(84) Benannte Vertragsstaaten:
**AT BE CH DE ES FR GB LI NL**

(56) Entgegenhaltungen:
**WO-A-86/03288**
**CH-A- 491 251**
**DE-A- 3 733 553**
**GB-A- 1 223 340**
**US-A- 4 273 468**

**VORTRIEB, SOLTAU-VORTRIEBS- TECHNIK,
April 1990, "Mit der GEO-Lasersteuerung Millimetergenau in das Ziel" Lüneburg, Seite 1**

(73) Patentinhaber: **Dyckerhoff & Widmann Aktiengesellschaft
Postfach 81 02 80
D-81902 München (DE)**

(72) Erfinder: **Die Erfinder haben auf ihre Nennung verzichtet**

(74) Vertreter: **Patentanwälte Dipl.-Ing. F.W. Möll
Dipl.-Ing. H.Ch. Bitterich
Postfach 20 80
D-76810 Landau (DE)**

## Beschreibung

Die Erfindung betrifft ein Verfahren zum Steuern eines Vortriebsschildes bei der Herstellung eines unterirdischen Hohlprofilstranges unter Verwendung einer Meßanordnung mit einem hinter dem Vortriebsschild innerhalb des Hohlprofilstranges angeordneten Servo-Theodoliten, an dem Vortriebsschild angeordneten Reflektoren und Neigungsgebern zur Feststellung der Verrollung und Längsneigung und mit zumindest einem rückwärtigen Fernziel sowie mit einem mit der Meßanordnung verbundenen Rechner, wobei die von der Meßanordnung gewonnenen Meßwerte on-line an den Rechner übertragen werden, der fortlaufend die jeweilige Ist-Lage des Vortriebsschildes berechnet und abspeichert sowie in Abhängigkeit von der ebenfalls abgespeicherten Soll-Lage Abweichungs- und/oder Steuerwerte für den Vortriebsschild abgibt, sowie eine Einrichtung zum Durchführen dieses Verfahrens.

Im Untertagebau gewinnt das Vorpressen zusammengesetzter Hohlprofilstränge, wie Rohre, Tunnel oder dergleichen zunehmend an Bedeutung. Als Vorpreßverfahren bezeichnet man eine Herstellungsweise, bei der von einem Startschacht aus ein aus mehreren gleichartigen Rohrabschnitten zusammengesetzter Strang beliebigen Querschnitts mittels hydraulischer Pressen in das Erdreich eingepreßt wird. Der in das Innere des Hohlprofils eindringende Boden wird dabei gelöst und durch den Strang hindurch gefördert. Am vorderen Ende des Hohlprofilstranges befindet sich ein steuerbares Element, z.B. ein Vortriebsschild, der das Eindringen ins Erdreich erleichtert und in dessen Schutz der Ausbruch erfolgt.

Der Vorschub vollzieht sich in der Weise, daß der gesamte Hohlprofilstrang mittels im Startschacht installierter Pressen jeweils um die Länge eines Rohrabschnitts vorgepreßt und taktweise durch Anfügen jeweils eines neuen Rohrabschnitts nach Rückstellung der Pressen im Startschacht verlängert wird. Um die Wandreibung beherrschbar zu halten, können, je nach Länge des Hohlprofilstranges, jeweils in einer Fuge zwischen zwei Rohrabschnitten sogenannte Dehnerstationen vorgesehen sein, in denen ebenfalls hydraulische Pressen angeordnet sind, mittels deren die dazwischenliegenden Abschnitte des Hohlprofilstranges vorgepreßt werden können.

Zur genauen Steuerung des Hohlprofilstranges ist eine ständige Kontrolle darüber erforderlich, ob die vorgegebene Sollachse des Stranges eingehalten ist. Die Steuerung kann bei kürzeren Strängen durch unterschiedliche Beaufschlagung der Vortriebspressen im Startschacht, bei längeren Strängen durch Steuerung des Vortriebsschildes unmittelbar erfolgen. Der Hohlprofilstrang reagiert je nach den Bodenverhältnissen mehr oder weniger rasch auf vorgenommene Steuermaßnahmen; er folgt jedoch immer dem vom Vortriebsschild aufgeschnittenen Hohlraum.

Die Einhaltung der Sollachse wird mittels vermessungstechnischer Maßnahmen kontrolliert. Bei konventionellen Meßverfahren müssen die Höhe und die Lage ausgezeichneter Punkte des Vortriebsschildes jeweils neu vom Startschacht aus herangeführt werden. Der Meßweg wird dabei ständig länger, so daß diese Verfahren sehr aufwendig sind; außerdem muß der Vortrieb während der Zeit der Vermessung ruhen. Krümmungen der Sollachse erfordern die Einschaltung von Polygonzügen und sind nur bei begehbaren Hohlprofilquerschnitten möglich.

Zur Erleichterung von Vermessungsarbeiten sind polare Vermessungssysteme bekannt, die nicht nur von der Punktaufnahme über die geodätischen Berechnungen bis hin zur Herstellung von Karten einen automatischen Datenfluß ermöglichen, sondern auch die automatische Zielerkennung und Zieleinstellung; es gibt elektronische Tachymeter, die aus einem elektronischen Theodolit und Entfernungsmesser bestehen und die in der Lage sind, auch bewegte Punkte zu verfolgen (DE-Z "Zeitschrift für Vermessungswesen", Heft 11, November 1984, S. 553 bis 563). Mittels dieser Systeme gelingt es, folgende Vorgänge zu automatisieren:

- Zeitpunkt der Messung auswählen,
- anzumessenden Punkt auswählen,
- Instrument auf den Punkt ausrichten,
- Instrument dem Punkt nachführen,
- Meßvorgang auslösen,
- Meßwerte registrieren,
- Meßwerte interpretieren,
- weiteren Messungsverlauf bestimmen.

Zu diesem Zweck werden die Grundbausteine - elektronischer Theodolit und Entfernungsmesser - durch weitere Baugruppen ergänzt, die die restlichen Funktionen übernehmen. Die Funktionen des Tachymeters können automatisiert werden; die für die Nachführung erforderliche Bewegung in den beiden Achsen kann durch Schrittmotoren mit entsprechenden Getrieben erfolgen. Zur Unterstützung der Funktionen des Tachymeters sowie zum Koordinieren des gesamten Meßablaufs (Punktauswahl, Meßzeitpunkt, Interpretation des Ergebnisses) ist ein Rechner erforderlich.

Während derartige Meßsysteme bislang nur im Tagebau eingesetzt wurden, ist es auch bekannt, eine solche Meßanordnung im Untertagebau zum Steuern einer Schildvortriebsmaschine zu verwenden (DE-A 37 33 553). Diese Meßanordnung umfaßt neben einem elektronischen Theodoliten, der selbsttätig arbeitend den Entfernungen von einem an der Rückseite der Schildvortriebsmaschine angeordneten Zielreflektor sowie den Horizontal- und Vertikalwinkeln entsprechende elektrische Signale abgibt, auch Neigungsgeber zur Feststellung der Verrollung und Längsneigung des Vortriebsschildes. Die Signale werden on-line auf den Rechner übertragen, der für eine fortlaufende Berechnung sowie Abspeicherung der räumlichen Ist-Lage des Vortriebsschildes und Abgabe von Abweichungs- sowie Steuerwerten in Abhängigkeit von der ebenfalls abgespeicherten räumlichen Soll-Lage des Vortriebsschildes ausgelegt ist.

Mit dieser Meßanordnung gelingt zwar eine weitgehende Automatisierung und somit Erleichterung der Vermessungsarbeiten; sie ist aber noch daran gebunden, daß der elektronische Theodolit hinter dem Vortriebsschild in einem ausgebauten Tunnelabschnitt ortsfest angeordnet ist und entsprechend der sich bei fortschreitendem Vortrieb vergrößernden Entfernung zum Vortriebsschild umgesetzt und neu eingemessen werden muß, was wiederum Stillstandszeiten bedingt. Außerdem setzt dies die Begehbarkeit des Hohlprofilstranges voraus.

Vor diesem Hintergrund liegt der Erfindung die Aufgabe zugrunde, eine Möglichkeit zu schaffen, um die zum Umsetzen des Theodoliten erforderlichen Arbeiten, insbesondere aber die dadurch bedingten Stillstandszeiten vermeiden und nach Möglichkeit auch Hohlprofilstränge mit nicht mehr begehbarem Querschnitt herstellen zu können.

Nach der Erfindung wird diese Aufgabe durch ein Verfahren mit den Merkmalen des Patentanspruchs 1 sowie eine Einrichtung mit den Merkmalen des Patentanspruchs 2 gelöst.

Vorteilhafte Weiterbildungen ergeben sich aus den Unteransprüchen.

Der Erfindung liegt die Erkenntnis zugrunde, daß sich ein vorgepreßter Hohlprofilstrang nur in dem durch den Vortriebsschild aufgeschnittenen Hohlraum, der sogenannten Spur des Vortriebsschildes, bewegen kann. Da die räumliche Kurve, die der Vortriebsschild beschrieben hat, ständig durch den Servo-Theodolit erfaßt und im Rechner abgespeichert wurde, ist mit hinreichender Genauigkeit die Ist-Lage der Längsachse der aufgefahrenen Röhre an den Stationen bekannt, an denen die Ist-Lage des Vortriebsschildes hinsichtlich der vom Startschacht aus gemessenen Länge und ihrer räumlichen Koordinaten ermittelt wurde. Da die Lage des Servo-Theodoliten sowie der vorderen und rückwärtigen Zielreflektoren bezüglich der Achse bekannt sind und der Servo-Theodolit in der Lage ist, neben den Horizontal- und Vertikalwinkeln zu den Reflektoren auch die Entfernungen zu diesen zu messen, gelingt es durch exakte Ermittlung der durch die Länge L der aufgefahrenen Röhre bestimmten Vortriebsstationen, an denen sich der Theodolit jeweils befindet, auf die dreidimensionalen Koordinaten der Standpunkte des Theodoliten und des Fernziels zu schließen, um aus diesen wiederum die Ist-Lage des Vortriebsschildes zu errechnen.

Wesentlich für die Erfindung ist also eine Zweiteilung des Vermessungsverfahrens, nämlich einmal die Bestimmung der Ist-Lage des Vortriebsschildes an längenmäßig entlang der Trasse exakt bezeichneten Stationen sowie deren eventuelle Abweichung von der Soll-Lage, um die Abweichung durch entsprechende Steuerung des Vortriebsschildes korrigieren zu können und die Verwendung der so ermittelten Ist-Trasse zur Bestimmung der Koordinaten der jeweiligen Standpunkte von Theodolit und Fernziel. Voraussetzung hierfür ist natürlich, daß die vom Servo-Theodolit und vom Rechner zu leistenden Arbeiten zur Zielerfassung so schnell ausgeführt werden, daß die Vortriebsgeschwindigkeit vernachlässigt werden kann und daß eine etwaige Verrollung erkannt und ausgeglichen wird; entsprechende Systeme stehen zur Verfügung.

Nach der Erfindung sind alle für die Vermessung der Ist-Lage des Vortriebsschildes erforderlichen "Festpunkte" innerhalb der aufgefahrenen Röhre beweglich; auf externe Festpunkte kann verzichtet werden. Damit eignet sich dieses Vermessungssystem vor allem für die Auffahrung von Hohlprofilsträngen mit nicht mehr begehbarem Querschnitt.

Verfahren und Einrichtung nach der Erfindung sind aber nicht an ein Vorpreßverfahren eines Hohlprofilstranges aus vorgefertigten rohrförmigen Abschnitten gebunden, sondern in grundsätzlich gleicher Weise auch bei einem Schildvortrieb anwendbar, bei dem die den Erddruck aufnehmende Auskleidung fortlaufend im Zuge des Schildvortriebs hinter diesem, sei es durch Einbringen von Ortbeton oder durch Einbau von Tübbingringen, hergestellt wird. Wesentlich für die Anwendung der Erfindung ist nur, daß durch den Vortriebsschild eine Öffnung bestimmt wird, die ihrerseits die Lage der Tunnelauskleidung definiert.

Die Erfindung wird nachstehend anhand der Zeichnung näher erläutert. Es zeigt:

Fig. 1 schematisch einen Längsschnitt durch einen im Vorpreßverfahren herzustellenden Hohlprofilstrang mit der Meßanordnung,

Fig. 2 einen Querschnitt entlang der Linie II-II in Fig. 1,

Fig. 3 einen Querschnitt entlang der Linie III-III in Fig. 1,

Fig. 4 einen Querschnitt entlang der Linie IV-IV in Fig. 1,

Fig. 5a und b im Grundriß und Längsschnitt schematisch den Beginn und die

Fig. 6 bis 8 im Grundriß schematisch weitere Arbeitsphasen bei der Herstellung eines gekrümmten Hohlprofilstranges im Vorpreßverfahren.

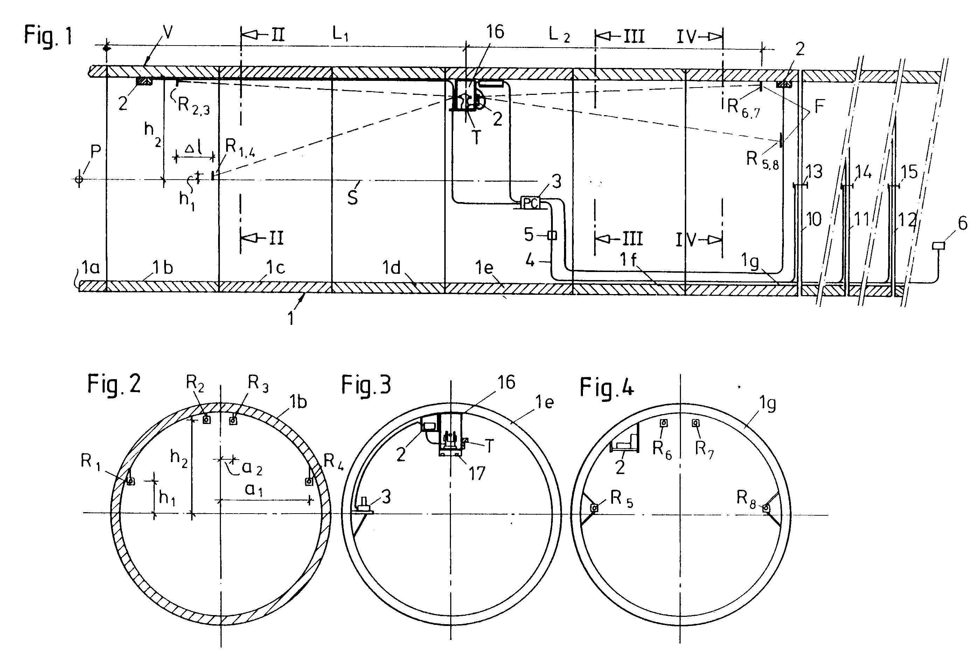

In den Fig. 1 bis 4 sind im Längsschnitt sowie in Querschnitten schematisch die wesentlichen Elemente der Meßanordnung nach der Erfindung in ihrer Zuordnung zu einem Vortriebsschild bzw. zueinander im Betriebszustand dargestellt. Dabei zeigt Fig. 1 einen Längsschnitt durch das vordere Ende eines Vortriebsrohres 1, das aus einzelnen Abschnitten 1a, b, c usw. besteht. Die Abschnitte 1a und 1b bilden den Vortriebsschild V; der Abschnitt 1a, in dem die Bodenlöse- und -fördereinrichtungen angeordnet sind, ist der Übersichtlichkeit halber weggelassen. In dem anschließenden Abschnitt 1b des Vortriebsschildes V sind zwei Gruppen von Reflektoren $R_1$, $R_2$ sowie $R_3$ und $R_4$ im Abstand Delta I voneinander angeordnet, deren räumliche Lage zur theoretischen Achse S des Vortriebsschildes V jeweils durch die Höhen $h_1$, $h_2$ und die Horizontalabstände $a_1$, $a_2$ bestimmt ist (Fig. 2).

Während die Rohrabschnitte 1c und 1d eine unbestimmte Anzahl von Abschnitten symbolisieren, ist im Rohrabschnitt 1e ein Servo-Theodolit T angeordnet, nachstehend nur als Theodolit bezeichnet. Dem Abschnitt 1e folgt wiederum unter Zwischenschaltung einer unbestimmten Anzahl weiterer Abschnitte, symbolisiert durch den Abschnitt 1f, ein Abschnitt 1g mit weiteren Reflektoren $R_5$, $R_6$ und $R_7$, $R_8$, die ein Fernziel F bilden. Die entlang der Trasse gemessene Horizontalentfernung des Theodoliten T zu einem idealen Punkt P am vorderen Ende des Vortriebsschildes V ist mit $L_1$ bezeichnet, die Entfernung vom Theodolit T zu den das Fernziel F bildenden Reflektoren $R_5$ bis $R_8$ ist mit $L_2$ bezeichnet.

Sowohl im Vortriebsschild V, als auch in dem den Theodoliten T aufweisenden Abschnitt 1e und in dem das Fernziel F aufweisenden Abschnitt 1g sind Neigungsgeber 2, sogenannte Inclinometer, zur Bestimmung von Verrollung und Längsneigung angeordnet. Sowohl die Neigungsgeber 2, als auch der Theodolit T sind direkt mit einem Rechner 3, z.B. einem PC, verbunden. Vom Rechner 3 führt eine Leitung 4 über einen Puffer 5 zu einem weiteren Rechner 6 am Portal über Tage, der auch mit einem Drucker verbunden sein kann.

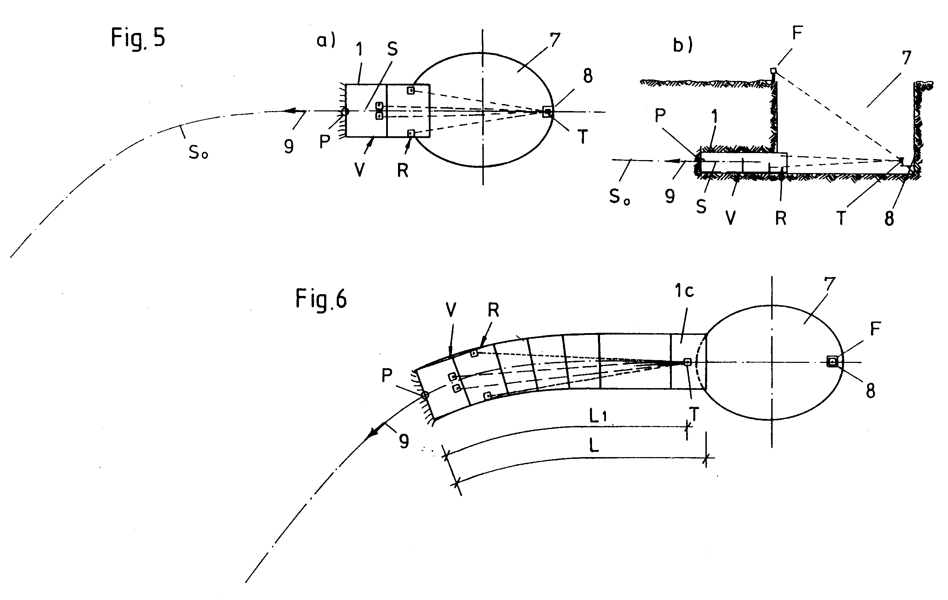

Der Beginn und der Ablauf des erfindungsgemäßen Vermessungsverfahrens kann anhand der Fig. 5 bis 8 erläutert werden.

In den Fig. 5a und 5b ist - unmaßstäblich - angedeutet, wie von einem Startschacht 7 ausgehend ein Vortriebsschild V mit den Reflektoren $R_1$ bis $R_4$, hier nur insgesamt mit R bezeichnet, in das Erdreich vorgepreßt wird. Zu Beginn des Vortriebs wird zunächst eine Konsole 8 als Standpunkt für den Theodoliten T vermessungstechnisch eingemessen; damit werden Y- und X-Werte sowie NN-Höhe festgelegt. Das gleiche geschieht mit einem Punkt an der Oberkante des Startschachtes 7, der für die Anfangsphase als Fernziel F dient.

Während der Auffahrung der ersten ca. 30 m in Richtung des Pfeils 9 wird die räumliche Kurve, die der ideelle Punkt P des Vortriebsschildes V beschrieben hat, ständig durch den Theodolit T erfaßt und im Rechner 3 abgespeichert. Zugleich wird in an sich bekannter Weise die so festgestellte Ist-Lage der Achse S des Vortriebsschildes mit der Soll-Lage $S_0$ der Trasse verglichen und werden Abweichungs- und/oder Steuerwerte abgegeben, anhand deren die Vortriebsrichtung kontrolliert und gegebenenfalls korrigiert wird. Da die dem Vortriebsschild V nachfolgenden Rohrabschnitte 1c, d, e usw. diesem nur in der durch den Vortriebsschild V aufgeschnittenen Öffnung nachfolgen können, ist mit ausreichender Genauigkeit die Ist-Lage der Achse der aufgefahrenen Röhre zu der jeweiligen Station bekannt, an der die Ist-Lage des Vortriebsschildes V ermittelt wurde.

Sobald der Vortriebsschild V eine Lage erreicht hat, in der z.B. durch Krümmung der Trasse eine Sichtverbindung zum Theodolit T nicht mehr besteht, wird dieser in den Rohrabschnitt 1e umgebaut (Fig. 6). Er kann jetzt weiterhin die am Vortriebsschild V angebrachten Reflektoren R anmessen, hat aber selbst keine festen Koordinaten mehr. Seine Koordinaten werden jetzt bestimmt durch die Messung der Weglänge L entlang der Achse der aufgefahrenen Röhre. Zu diesem Zweck sind sowohl die - nicht dargestellten - Vortriebspressen im Startschacht 7, als auch etwaige Dehnerstationen 10, 11, 12 (Fig. 1) mit Weggebern 13, 14, 15 versehen, deren Meßwerte ebenfalls unmittelbar an den Rechner 3 übermittelt werden. Durch exakte Bestimmung der Länge L der aufgefahrenen Röhre sind aus der vorangegangenen Ermittlung der Ist-Lage der Achse S des Vortriebsschildes V die dreidimensionalen Koordinaten des jeweiligen Standpunkts des Theodoliten bekannt; Zwischenwerte können gegebenenfalls geradlinig interpoliert werden.

Um einwandfreie Meßwerte des Theodoliten T zu bekommen, muß er innerhalb des Arbeitsbereiches eines üblicherweise eingebauten zweiachsigen Kompensators horizontiert sein. Sollte diese Horizontierung während des Vortriebs z.B. durch Verrollung verlorengehen, muß eine automatische Korrektur der Verrollung erfolgen. Dieser dienen die am Standpunkt des Theodoliten T installierten Neigungsgeber 2 zur Bestimmung von Verrollung und Längsneigung, die die exakten Neigungswerte unmittelbar an den Rechner 3 geben.

Um auch größere Korrekturen der Verrollung ausführen zu können, ist der Theodolit T an dem Rohrabschnitt 1e so gelagert, daß er um dessen Längsachse S verschwenkt werden kann (Fig. 3). Dies kann beispielsweise dadurch geschehen, daß die den Theodolit T tragende Konsole 16 mit einem Horizontiertisch 17 an Schienen entlang des Umfangs des Rohrabschnitts 1e beweglich gelagert ist. Stellmotoren besorgen die Rückstellung in den Arbeitsbereich des Kompensators. Diese automatische Verrollungskorrektur arbeitet ständig und selbständig und hält den Theodolit T dauernd im Arbeitsbereich seines Kompensators.

In dieser, noch immer dem Beginn des Vorpreßverfahrens zuzurechnenden Situation kann der Theodolit T noch von dem festen Fernziel F ausgehen, das nun allerdings auf den früheren Standpunkt des Theodoliten im Startschacht 7, die Konsole 8, umgesetzt wurde (Fig. 6). Die Strecke $L_1$ zwischen dem ideellen Punkt P bzw. die daraus ableitbare Strecke zwischen den Reflektoren R im Vortriebsschild V und dem Theodolit T ist jetzt praktisch konstant; Verschiebungen in der Strecke resultieren allenfalls aus Kurvenfahrten, also aus einer Verkürzung der Innen- und Verlängerung der Außenseiten. So werden weitere ca. 30 m aufgefahren.

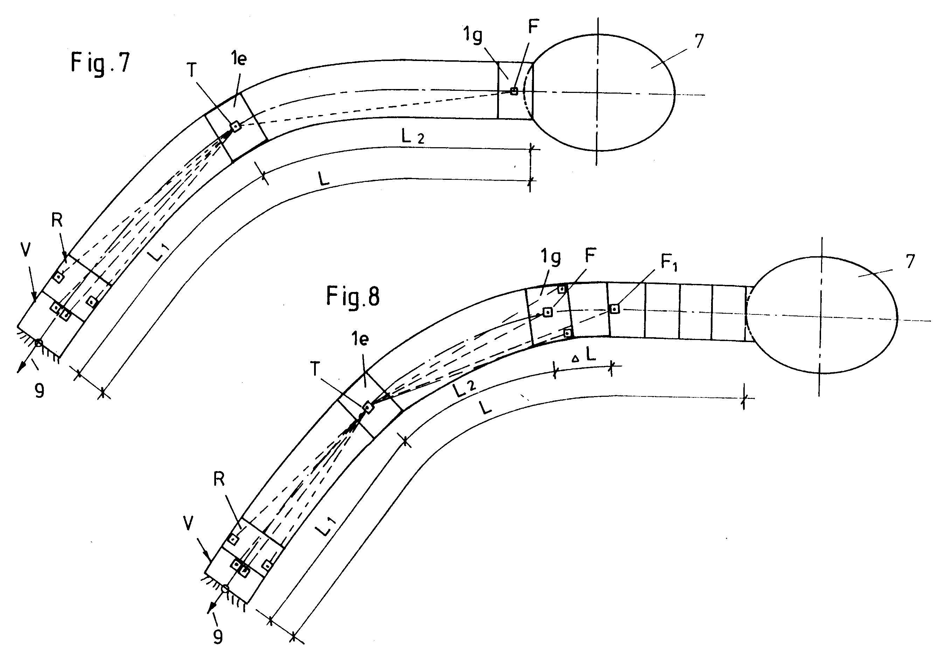

Nach dieser Zwischenphase wird das bis dahin noch feste Fernziel F in den Rohrabschnitt 1g umgesetzt und so in ein ebenso mitfahrendes Fernziel umgewandelt (Fig. 7). Das Fernziel F umfaßt jetzt die Reflektoren $R_5$, $R_6$, $R_7$ und $R_8$. Aufgrund der von doppelten Neigungsgebern für Verrollung und Längsneigung installierten Neigungsgebern 2 sind diese Werte bekannt und als Korrekturwerte zu $R_5$, $R_6$, $R_7$ und $R_8$ zu verwenden. Die auf die Achse S bezogenen Koordinaten des Fernzieles F sind bekannt und wiederum über die durch die Länge L definierte Station im Rechner 3 abrufbar; Zwischenwerte können auch hier interpoliert werden.

Den Endzustand, d.h. den Zustand des normalen Betriebes, zeigt Fig. 8. In dieser Phase sind alle "Festpunkte" innerhalb der schon aufgefahrenen Röhre beweglich. Durch exakte Ermittlung der jeweiligen Stationen mittels der Länge L des zurückgelegten Weges, also für den Theodolit T : $L - L_1$ und für das Fernziel F : $L - (L_1 + L_2)$, sind die dreidimensionalen Koordinaten der Standpunkte des Theodoliten T und des Fernziels F bekannt.

Durch Einbau eines weiteren Fernzieles $F_1$, dessen Abstand $Delta_L$ zum Fernziel F etwa dieselbe Länge haben sollte wie die Entfernung $L_2$ zwischen Servo-Theodolit und Fernziel F, kann der Theodolitstandpunkt in Y, X und NN-Höhe kontrolliert werden. Damit ist auch eine Kontrolle zwischen der Stationierung und den gerechneten Koordinaten möglich.

Bei dem in Fig. 8 dargestellten Vermessungssystem bestimmt der mitfahrende Theodolit T, ausgehend von einem sich ebenfalls mitbewegenden Fernziel F jeweils die Festpunkte R in dem Vortriebsschild V und legt somit die aufgefahrene Röhre in ihrer räumlichen Lage fest. Eine Sichtverbindung zum Startschacht 7 ist nicht mehr erforderlich. Alle Geräte werden über einen Rechner 3 gesteuert, der bei großen Durchmessern in der Röhre stehen kann, wie z.B. in Fig. 1 dargestellt, bei kleinen Durchmessern zweckmäßigerweise über Tage, z.B. über dem Startschacht 7, untergebracht ist.

## Patentansprüche

1. Verfahren zum Steuern eines Vortriebsschildes bei der Herstellung eines unterirdischen Hohlprofilstranges unter Verwendung einer Meßanordnung mit einem hinter dem Vortriebsschild (V) innerhalb des Hohlprofilstranges angeordneten Servo-Theodoliten (T), an dem Vortriebsschild (V) angeordneten Reflektoren (R) und Neigungsgebern zur Feststellung der Verrollung und Längsneigung und mit zumindest einem rückwärtigen Fernziel (F) sowie mit einem mit der Meßanordnung verbundenen Rechner, wobei ein Teil der Meßanordnung im Zuge des Vortriebs mit dem Vortriebsschild (V) mitbewegt wird, wobei vom Servo-Theodolit (T) neben den an dem Vortriebsschild (V) angeordneten vorderen Reflektoren (R) auch das rückwärtige Fernziel (F) anvisiert wird, wobei ferner die von der Meßanordnung gewonnenen Werte unter Berücksichtigung einer etwaigen Verrollung on-line auf den Rechner übertragen werden, der fortlaufend die jeweilige Ist-Lage des Vortriebsschildes (V) berechnet und abspeichert sowie in Abhängigkeit von der ebenfalls abgespeicherten Soll-Lage Abweichungs- und/oder Steuerwerte für den Vortriebsschild (V) abgibt und wobei schließlich fortlaufend die Länge der aufgefahrenen Röhre ermittelt wird, dadurch gekennzeichnet, daß

   1. im Zuge des Vortriebs im Vorpreßverfahren die gesamte Meßanordnung mit dem Hohlprofilstrang mitbewegt wird,

   2. vom Servo-Theodolit (T) laufend das mehrere mit dem Hohlprofilstrang mitbewegte Reflektoren ($R_{5, 6, 7, 8}$) aufweisende Fernziel (F) anvisiert wird,

   3. mittels sowohl an den Vortriebspressen, als auch an den Pressen von etwaigen Dehnerstationen angeordneter Weggeber fortlaufend die Länge (L) der aufgefahrenen Röhre gemessen wird,

   4. über den Rechner fortlaufend aus den Koordinaten der Ist-Lage des Vortriebsschildes (V) und der jeweiligen Länge (L) der Rohre unter Berücksichtigung der Verrollung und Längsneigung die Koordinaten der Standpunkte des Servo-Theodoliten (T) und des Fernziels (F) ermittelt werden, die der vom Vortriebsschild (V) aufgefahrenen Spur parallel zur Achse der Röhre in vorgegebenen Abständen folgen und

5. die Koordinaten des Servo-Theodoliten (T) anhand der Meßwerte zu dem rückwärtigen Fernziel (F) kontrolliert werden.

**2.** Einrichtung zur Durchführung des Verfahrens zum Steuern eines Vortriebsschildes nach Patentanspruch 1, bestehend aus einer Meßanordnung mit einem hinter dem Vortriebsschild (V) innerhalb des Hohlprofilstranges angeordneten Servo-Theodoliten (T), an dem Vortriebsschild (V) angeordneten Reflektoren (R) und Neigungsgebern zur Feststellung der Verrollung und Längsneigung und mit zumindest einem rückwärtigen Fernziel (F) sowie mit einem mit der Meßanordnung verbundenen Rechner, wobei der Servo-Theodolit (T) im Abstand von dem Vortriebsschild und - diesem entgegengesetzt - im Abstand vom Servo-Theodoliten (T) ein Fernziel (F) angeordnet sind, dadurch gekennzeichnet, daß

1. der Servo-Theodolit (T) und das mehrere Reflektoren ($R_{5, 6, 7, 8}$) aufweisende Fernziel (F) mit dem Hohlprofilstrang mitbewegbar angeordnet sind,

2. zum Messen der Länge der aufgefahrenen Röhre Weggeber (13, 14, 15) sowohl an den Vortriebspressen, als auch an den Pressen von etwaigen Dehnerstationen (10, 11, 12) angeordnet sind und

3. zur Feststellung der Verrollung und der Längsneigung auch an dem Servo-Theodoliten (T) und an den als Fernziel (F) dienenden Reflektoren ($R_{5, 6, 7, 8}$) Neigungsgeber vorgesehen und zur on-line-Übertragung der Meßwerte mit dem Rechner verbunden sind.

**3.** Einrichtung nach Anspruch 2, dadurch gekennzeichnet, daß der Servo-Theodolit (T) für einen zusätzlichen Verrollungsausgleich auf einem um die Achse des Hohlprofilstranges verschwenkbaren Tisch (17) gelagert ist.

**4.** Einrichtung nach Anspruch 2, dadurch gekennzeichnet, daß an dem Vortriebsschild (V) mindestens zwei Reflektoren ($R_{1, 4}$ bzw. $R_{2, 3}$) in unterschiedlichen Abständen von dem Servo-Theodoliten (T) angeordnet sind.

**5.** Einrichtung nach Anspruch 2 oder 4, dadurch gekennzeichnet, daß im Abstand von den ein erstes Fernziel (F) bildenden Reflektoren weitere Reflektoren vorgesehen sind, die ein zweites Fernziel ($F_1$) bilden.

## Claims

**1.** A method of controlling a driving shield in the construction of an underground hollow profile section using a measuring assembly with a servotheodolite (T) disposed behind the driving shield (V) inside the hollow profile section, reflectors (R) disposed on the driving shield (V) and inclination sensors for determining the rolling and longitudinal inclination, and with at least one rear remote target (F) and also with a computer connected to the measuring assembly, wherein one part of the measuring assembly is moved together with the driving shield (V) in the course of the driving operation, wherein in addition to front reflectors (R) mounted on the driving shield (V) the rear remote target (F) is also sighted by the servotheodolite (T), wherein further the values produced by the measuring assembly are transmitted to the computer on-line taking into account any rolling, which computer continuously calculates and stores the respective actual position of the driving shield (V) and supplies deviation and/or control values for the driving shield (V) as a function of the also stored desired position, and, finally, wherein the length of the driven pipe is continuously determined, characterised in that

1. during the driving operation using the advancing-pushing method the entire measuring assembly moves together with the hollow profile section;

2. the remote target (F) having a plurality of reflectors ($R_{5, 6, 7, 8}$) moved together with the hollow profile section is sighted continuously by the servotheodolite (T);

3. the length (L) of the driven pipe is measured continuously by means of path sensors mounted both on the driving presses and also on the presses of any expander stations;

4. the co-ordinates of the viewing points of the servotheodolite (T) and of the remote target (F) are continuously determined via the computer from the coordinates of the actual position of the driving shield (V) and the respective length (L) of the pipe, taking into account the rolling and longitudinal inclination, which co-ordinates follow at predetermined distances the track driven by the driving shield (V) parallel to the axis of the pipe, and

    5. the co-ordinates of the servotheodolite (T) are controlled on the basis of the measured values relative to the rear remote target (F).

**2.** A device for carrying out the method for controlling a driving shield according to Claim 1, comprising a measuring assembly with a servotheodolite (T) disposed behind the driving shield (V) inside the hollow profile section, reflectors (R) disposed on the driving shield (V) and inclination sensors for determining the rolling and longitudinal inclination, and with at least one rear remote target (F) and also with a computer connected to the measuring assembly, wherein the servotheodolite (T) is disposed at a distance from the driving shield and, opposite thereto, a remote target (F) is disposed at a distance from the servotheodolite (T), characterised in that

    1. the servotheodolite (T) and the remote target (F) having a plurality of reflectors ($R_{5, 6, 7, 8}$) are moved together with the hollow profile section;

    2. for measuring the length of the driven pipe path sensors (13, 14, 15) are mounted both on the driving presses and also on the presses of any expander stations (10, 11, 12), and

    3. for determining the rolling and the longitudinal inclination, inclination sensors are provided both on the servotheodolite (T) and on the reflectors ($R_{5, 6, 7, 8}$) serving as the remote target (F) and they are connected to the computer for on-line transmission of the measured values.

**3.** A device according to Claim 2, characterised in that for additional rolling compensation the servotheodolite (T) is mounted on a table (17) pivotable about the axis of the hollow profile section.

**4.** A device according to Claim 2, characterised in that at least two reflectors ($R_{1, 4}$ or $R_{2, 3}$) are arranged at different distances from the servotheodolite (T).

**5.** A device according to Claim 2 or 4, characterised in that further reflectors, which form a second remote target ($F_1$), are provided at a distance from the reflectors forming a first remote target (F).

**Revendications**

**1.** Procédé de commande d'un bouclier d'avancement, lors de la réalisation d'un tronçon de profilé creux, souterrain, avec utilisation d'un dispositif de mesure comprenant un servothéodolite (T), disposé derrière le bouclier d'avancement (V), à l'intérieur du tronçon profilé creux, avec des réflecteurs (R) disposés sur le bouclier d'avancement (V) et des capteurs d'inclinaison, pour déterminer le vrillage et l'inclinaison longitudinale, et avec au moins une cible distante (F) arrière, ainsi qu'avec un calculateur, relié au dispositif de mesure,

une partie du dispositif de mesure étant déplacé conjointement avec le bouclier d'avancement (V) au cours de la progression,

une visée de la cible distante (F) arrière étant effectuée également par le servo-théodolite (T), outre la visée des réflecteurs avant (R) disposés sur le bouclier d'avancement (V),

les valeurs acquises par le dispositif de mesure étant en outre transmises "en ligne", en prenant en considération un éventuel vrillage, au calculateur qui calcule et stocke en continu la position réelle respective du bouclier d'avancement (V), ainsi qu'envoie, en fonction des valeurs également stockées de position de consigne des valeurs d'écart et/ou de commande destinées au bouclier d'avancement (V), et

la longueur de tubes mis en place étant enfin déterminée en continu, caractérisé en ce que

    1. au cours de la progression, lors du processus d'ébauchage, l'ensemble du dispositif de mesure est déplacé conjointement avec le tronçon profilé creux,

    2. la cible distante (F), présentant plusieurs réflecteurs ($R_{5, 6, 7, 8}$), déplacés conjointement avec le tronçon profilé creux, est visée en continu par le servo-théodolite (T),

    3. la longueur (L) des tubes mis en place est mesurée en continu, au moyen de capteurs de déplacement, disposés tant sur les vérins d'avancement qu'également sur les vérins d'éventuels postes d'extension,

    4. les coordonnées des points sites du servo-théodolite (T) et de la cible distante (F), qui suivent la trajectoire suivie par le bouclier d'avancement (V), parallèlement à l'axe des tubes et selon des espacements prédéterminés, sont déterminées par l'intermédiaire du calculateur, en continu, à partir des coordonnées de la position réelle du bouclier d'avancement (V) et de la longueur (L) respective des tubes, en prenant en considération le vrillage et l'inclinaison longitudinale, et

    5. les coordonnées du servo-théodolite (T) sont contrôlées à l'aide des valeurs de mesure obtenue sur la cible distante (F) arrière.

**2.** Dispositif pour la mise en oeuvre du procédé de commande d'un bouclier d'avancement selon la revendication 1, composé d'un dispositif de mesure comprenant un servo-théodolite (T), disposé derrière le bouclier d'avancement (V), à l'intérieur du tronçon profilé creux, avec des réflecteurs (R) disposés sur le bouclier d'avancement (V) et des capteurs d'inclinaison, pour déterminer le vrillage et l'inclinaison longitudinale, et avec au moins une cible distante (F) arrière, ainsi qu'avec un calculateur, relié au dispositif de mesure, le servo-théodolite (T) étant disposé à distance du bouclier d'avancement et - à l'opposé de celui-ci - une cible distante (F) étant disposée à distance du servo-théodolite (T), caractérisé en ce que

1. le servo-théodolite (T) et la cible distante (F) comportant plusieurs réflecteurs ($R_{5, 6, 7, 8}$) sont disposés de façon à pouvoir être déplacés conjointement avec le tronçon profilé creux,

2. des capteurs de déplacement (13, 14, 15) sont disposés, tant sur les vérins d'avancement qu'également sur les vérins d'éventuels postes d'extension (10, 11, 12), en vue de mesurer la longueur des tubes mis en place, et

3. des capteurs d'inclinaison sont également prévus sur le servo-théodolite (T) et sur les réflecteurs ($R_{5, 6, 7, 8}$) servant de cible distante (F), en vue de déterminer le vrillage et l'inclinaison longitudinale, et sont reliés au calculateur, en vue d'assurer la transmission "en ligne" des valeurs de mesure.

**3.** Dispositif selon la revendication 2, caractérisé en ce que le servo théodolite (T) est monté sur une table (17) pouvant pivoter autour de l'axe du tronçon profilé creux, pour permettre une compensation supplémentaire du vrillage.

**4.** Dispositif selon la revendication 2, caractérisé en ce qu'au moins deux réflecteurs ($R_{1, 4}$ respectivement $R_{1, 3}$) sont disposés sur le bouclier d'avancement (V), à des distances différentes du servo-théodolite (T).

**5.** Dispositif selon la revendication 2 ou 4, caractérisé en ce que d'autres réflecteurs, constituant une deuxième cible distante ($F_1$), sont prévus à distance des réflecteurs constituant une première cible distante (F).

Fig.1

Fig.2

Fig.3

Fig.4

Fig. 5

a)

b)

Fig. 6

EP 0 464 363 B1

Fig.7

Fig.8